# EUROPÄISCHE PATENTSCHRIFT

(11) **EP 1 003 961 B1**
(45) Veröffentlichungstag und Bekanntmachung des Hinweises auf die Patenterteilung: **30.10.2002**
(21) Anmeldenummer: 98945173.7
(22) Anmeldetag: 07.08.1998
(51) Int. Cl.: F02D 41/26, B60K 41/04

(54) **ELEKTRONISCHES STEUERGERÄT**
ELECTRONIC CONTROL UNIT
UNITE DE COMMANDE ELECTRONIQUE

(30) Priorität: 14.08.1997 DE 19735319
(43) Veröffentlichungstag der Anmeldung: 31.05.2000
(73) Patentinhaber: Bayerische Motoren Werke Aktiengesellschaft, 80809 München (DE)
(72) Erfinder: ALBERT, Christian, 82380 Peissenberg (DE)
(86) Internationale Anmeldenummer: EP9805013
(87) Internationale Veröffentlichungsnummer: WO99009311

(56) Entgegenhaltungen:
- US-A- 4 337 513
- US-A- 4 410 938
- US-A- 5 159 674
- US-A- 5 483 692
- PATENT ABSTRACTS OF JAPAN vol. 014, no. 321 (P-1074), 10. Juli 1990 & JP 02 105251 A (JAPAN ELECTRON CONTROL SYST CO LTD), 17. April 1990
- PATENT ABSTRACTS OF JAPAN vol. 097, no. 001, 31. Januar 1997 & JP 08 244499 A (TOYOTA MOTOR CORP), 24. September 1996
- PATENT ABSTRACTS OF JAPAN vol. 007, no. 249 (P-234), 5. November 1983 & JP 58 132807 A (HINO JIDOSHA KOGYO KK), 8. August 1983

## Beschreibung

Die Erfindung betrifft ein elektronisches Steuergerät zum Steuern autonom steuerbarer Baugruppen sowie eine Verwendung des elektronischen Steuergerätes als zentrale Fahrzeugsteuerelektronik.

Die Steuerungs- und Regelungstechnik spielt in der Elektrotechnik eine große Rolle. Seit dem Beginn der modernen Mikroelektronik sind viele mechanische Steuerungen und Regelungen durch elektronische Steuerungen und Regelungen ergänzt oder ersetzt worden. Bei der Weiterentwicklung der elektronischen Steuerungs- und Regelungstechnik spielen intelligente Mikroprozessoren eine bedeutende Rolle, wobei aufgrund des zunehmenden Preisverfalls der Mikroprozessoren deren Anwendung auch aus dem Privatbereich nicht mehr wegzudenken ist. Viele elektronische Steuer- und Regelgeräte sind daher auf der Basis eines Mikroprozessors (z.B. Mikrokontroller, Signalprozessor) aufgebaut.

Ein Vorteil von rechnergesteuerten Steuer- und Regelgeräten ist, daß der der Steuerung oder der Regelung zugrundeliegende Algorithmus mittels eines in einem Speicher gespeicherten Rechenprogramms realisiert werden kann. Ein solches Rechenprogramm kann leicht ausgetauscht werden, so daß das entsprechende Steuer- oder Regelgerät einfach und schnell auf den neuesten Stand der Entwicklung gebracht werden kann, ohne das Gerät selbst verändern zu müssen. Ferner lassen sich mittels rechnergesteuerter Steuer- und Regelgeräte sehr komplizierte Steuer- oder Regelalgorithmen relativ einfach realisieren, deren schaltungstechnische Umsetzung sehr kompliziert, umfangreich und folglich kostenintensiv wäre. Auch lassen sich zusätzlich neue Aufgaben lösen, die in der Analogtechnik nicht realisierbar gewesen wären.

Viele Systeme weisen mehrere autonom steuerbare Baugruppen auf, die durch den Einsatz einer Mehrzahl von Steuergeräten zur Erfüllung von dem System dienenden Aufgaben gesteuert werden.

Da jeder autonom steuerbaren Baugruppe ein einziges unabhängig arbeitendes Steuergerät zugeordnet ist, ist das System transparent, so daß die Steuergeräte unabhängig voneinander entwickelt, gewartet und aktualisiert werden können.

Wird das System vom Hersteller mit unterschiedlichen Ausstattungen an autonom steuerbaren Baugruppen angeboten, so weist es je nach Ausstattung unterschiedliche Steuergeräte auf. Auch durch Sonderwünsche von Kunden kann die Anzahl von Kombinationen von steuerbaren Baugruppen weiter erhöht werden. Eine hohe Anzahl zu realisierender Kombinationen von steuerbaren Baugruppen macht das System jedoch unflexibel, belastet dessen Herstellung und führt zu einer aufwendigen und teueren Fertigung.

In der Regel steht ferner für Steuergeräte in einem solchen System nur ein begrenzter Raum zur Verfügung, so daß die Steuergeräte in enger räumlicher Nähe zueinander angeordnet sein müssen. Ist der zur Verfügung stehende Raum klein, so kann es schwierig sein, die Steuergeräte aufgrund deren hohen Anzahl und Größe in diesem Raum anzuordnen, zu warten und zu aktualisieren.

In US 4,337,513 ist ein Verfahren zum elektronischen Steuern eines Verbrennungsmotors mit einer Mehrzahl von Motorsteuerprogrammen offenbart, die von einer CPU ausgeführt werden können. Die Perioden, zu denen die einzelnen Programme aktiviert werden, werden entsprechend der Signifikanz des jeweiligen Programm für das Steuern des Motors basierend auf einem dem Programm zugeordneten Prioritätsgrad festgelegt. Ferner ist bekannt, über eine Tastaturkonsole auf einen mit einem Mikroprozessor gekoppelten Speicher zuzugreifen, der Steuerprogramme zum Steuern eines Test-Automobils enthält (Amano, M., Ishii, J., Kurihara, N., Sasayama, T. und Suda, S. "Development of Automobile Control and Data Acquisition Equipment Employing a 16-Bit Microcomputer", 16th International Symposium on Automotive Technology & Automation", 11.-15. Mai 1987, Florenz, Italien).

Ein anderes Problem sind die häufig hohen Fertigungskosten für die Vielzahl von unterschiedlichen Steuergeräten.

Ein typisches Beispiel für das oben genannte System ist ein Kraftfahrzeug mit Kraftfahrzeugelektronik, die rednergesteuerte Steuergeräte aufweist. Steuerungen, wie z.B. eine Motorsteuerung (DME) oder eine Getriebesteuerung, werden mittels solcher rechnergesteuerter elektronischer Steuergeräte realisiert, so daß in dem Kraftfahrzeug eine Mehrzahl von Steuergeräten vorhanden sind. Üblicherweise wird ein Kraftfahrzeug vom Hersteller mit unterschiedlichen Ausstattungen an steuerbaren Baugruppen angeboten, so daß je nach Ausstattung unterschiedliche Steuergeräte in das Kraftfahrzeug eingebaut werden müssen, wodurch das Herstellen des Kraftfahrzeugs aufwendig und teuer ist. Auch steht in einem Kraftfahrzeug nur ein begrenzter Raum für die Steuergeräte zur Verfügung, so daß das Anordnen der Steuergeräte aufgrund deren großen Anzahl und Größe mit Schwierigkeiten verbunden sein kann. Ferner ist der Kraftfahrzeugmarkt hart umkämpft, so daß die Herstellungskosten der Steuergeräte sowie die Kosten für deren Installation in dem Kraftfahrzeug möglichst gering sein müssen.

Aufgabe der Erfindung ist, die im Rahmen eines Systems anfallenden Steueraufgaben flexibel, kostengünstig und platzsparend unter Wahrung der Transparenz technisch zu realisieren.

Dies wird erfindungsgemäß mit einem elektronischen Steuergerät zum Steuern von gesonderten autonom steuerbaren Baugruppen gelöst, das eine zentrale Steuervorrichtung, einen Speicher und Steuerschnittstellen aufweist. Der Speicher weist mehrere, einander nicht überschneidende Speicherbereiche auf, denen jeweils eine Diagnoseadresse und eine Programmierungsadresse zugeordnet ist. Die zentrale Steuervorrichtung ist unter Ausbildung jeweils einer der jeweiligen Baugruppe zugeordneten virtuellen Steuereinheit an jeden der Speicherbereiche mit diesen im Zeitmultiplex zusammenwirkend angeschlossen, weist eine Diagnoseschnittstelle auf und ist derart ausgelegt, daß über diese unter Verwendung der Diagnose- bzw. der Progammierungsadressen auf den der jeweiligen Adresse zugeordneten Speicherbereich von außen gesondert zugegriffen werden kann. Ferner sind die Steuerschnittstellen an die zentrale Steuervorrichtung derart angeschlossen, daß jeder virtuellen Steuereinheit eine der Steuerschnittstellen zugeordnet ist.

Die zentrale Steuervorrichtung des erfindungsgemäßen Steuersystems weist einen solchen Mikroprozessor auf, mit dessen Hilfe das Wechseln des Zugriffs der zentralen Steuervorrichtung auf den jeweiligen Speicherbereich derart schnell erfolgen kann, daß die Zeitdauer für den einmaligen Zugriff des Mikroprozessors auf jeden der einer virtuellen Steuereinheit zugeordneten Speicherbereiche gegenüber den relevanten Steuerzeiten bei der Steuerung der Baugruppen vernachlässigbar gering ist, so daß das erfindungsgemäße elektronische Steuergerät nach außen derart wirkt, als seien die virtuellen Steuereinheiten gleichzeitig verfügbar.

Erfindungsgemäß weist die zentrale Steuereinheit eine zur Eingabe und zur Ausgabe von Daten geeignete Diagnoseschnittstelle auf und ist derart ausgelegt, daß auf jeden der Speicherbereiche unter Verwendung der dem jeweiligen Speicherbereich zugeordneten Diagnoseadresse oder Programmierungsadresse über die Diagnoseschnittstelle von außen gesondert zugegriffen werden kann. In Abhängigkeit von der jeweiligen Adresse stellt die zentrale Steuervorrichtung eine Verbindung zwischen der Diagnoseschnittstelle und dem angesprochenen Speicherbereich derart bereit, daß in jedem der Speicherbereiche gespeicherte und der jeweiligen virtuellen Steuereinheit zugeordnete Daten über die Diagnoseschnittstelle unabhängig von den in den anderen Speicherbereichen gespeicherten Daten abgefragt, aktualisiert, dokumentiert und gelöscht werden können. Dabei ermöglicht die Diagnoseadresse den Zugriff auf die in dem Speicherbereich gespeicherten Arbeitsdaten, während auf das der jeweiligen virtuellen Steuereinheit zugrundeliegende Rechenprogramm über die Programmierungsadresse zugegriffen werden kann.

Da ferner jeder virtuellen Steuereinheit eine, von den Steuerschnittstellen der anderen virtuellen Steuereinheiten gesonderte Steuerschnittstelle zugeordnet ist, sind die virtuellen Steuereinheiten des erfindungsgemäßen Steuergerätes hinsichtlich ihrer Steuerfunktionen vollständig unabhängig voneinander oder autonom. Mit dem erfindungsgemäßen Steuergerät wird daher erreicht, daß eine Mehrzahl von Baugruppen eines Systems von einem einzigen Steuergerät steuerbar sind, weil dieses mehrere virtuelle Steuereinheiten aufweist, die jeweils an eine der Baugruppen angepaßt und dieser zugeordnet sind. Da die virtuellen Steuereinheiten an die jeweilige Baugruppe einfach angepaßt werden können, weist das erfindungsgemäße Steuergerät eine hohe Flexibilität auf.

Da erfindungsgemäß ein einziges Steuergerät die Funktionen einer Mehrzahl von Steuergeräten aus dem Stand der Technik in sich vereint und ein Teil der Hardware des erfindungsgemäßen elektronischen Steuergerätes effizient im Zeitmultiplexverfahren mehrfach ausgenutzt wird, wird eine erhebliche Kosten- und Platzersparnis erzielt. Ferner kann das erfindungsgemäße Steuergerät je nach Systemausstattung hinsichtlich der Steuerungsfunktion unterschiedliche virtuelle Steuereinheiten bei gleichbleibender Hardware aufweisen, so daß das Fertigen des Systems mit unterschiedlichen Ausstattungsvarianten erheblich vereinfacht ist.

Die Transparenz des erfindungsgemäßen Steuergerätes bleibt erhalten, da die virtuellen Steuereinheiten unabhängig voneinander arbeiten und auf die den jeweiligen virtuellen Steuereinheiten zugeordneten Daten separat zugegriffen werden kann. Da ein gesonderter Zugriff auf die einzelnen virtuellen Steuereinheiten möglich ist, kann das Rechenprogramm für jede einzelne virtuelle Steuereinheit, wie z.B für eine Programmaktualisierung, separat geändert werden. Dies bringt den weiteren Vorteil mit sich, daß die den virtuellen Steuereinheiten zugrundeliegenden Rechenprogramme unabhängigig voneinander sind und daher z.B von unterschiedlichen Abteilungen eines Unternehmens entwickelt werden können.

Gemäß einer bevorzugten Ausführungsform des erfindungsgemäßen Steuergerätes ist die Anzahl der zur Verfügung stehenden virtuellen Steuereinheiten des Steuergerätes größer als die Anzahl der steuerbaren Gruppen des Systems, in dem das Steuergerät eingesetzt ist. Hierdurch wird ermöglicht, daß bei Bedarf, wenn das System nachträglich durch zusätzliche steuerbare Baugruppen erweitert werden muß, das erfindungsgemäße Steuergerät hinsichtlich seiner Steuerfunktion durch bloße Zuschaltung einer betreffenden freien Steuereinheit ohne Hardwareänderungen erweitert werden kann.

Der Speicher kann ein dynamischer oder ein statischer Speicher oder ein EPROM/Flash-EPROM sein und dabei aus einem Speicherbaustein oder aus mehreren Speicherbausteinen bestehen. Auch kann jeder der Speicherbereiche als eigenständiger Speicherbaustein ausgebildet sein, so daß jede der virtuellen Steuereinheiten einen eigenständigen Speicherbaustein aufweist.

Die Steuerschnittstellen können als digitale oder als analoge Schnittstellen ausgebildet sein. Ferner ist es möglich, daß Steuerschnittstellen individuell oder gemeinsam von der digitalen Betriebsart auf die analoge Betriebsart und umgekehrt umschaltbar sind, oder daß die Steuerschnittstellen in mehrere Schnittstellenbereiche unterteilt sind, die ihrerseits analoge oder digitale Schnittstellen ausbilden. Zur drahtlosen Signalübertragung können die Steuerschnittstellen Sender und Empfänger für Ultraschall oder elektromagnetische Wellen aufweisen, so daß die Anzahl der erforderlichen elektrischen Leitungen zwischen dem elektronischen Steuergerät und den autonom steuerbaren Baugruppen herabgesetzt werden kann. Auch ist eine Kommunikation zwischen dem erfindungsgemäßen elektronischen Steuergerät und den jeweiligen steuerbaren Baugruppen über eine Stromversorgungsleitung möglich. In diesem Fall ist unter einer Steuerschnittstelle eine Vorrichtung zu verstehen, mittels derer Signale über eine Stromversorgungsleitung aussendbar und/oder empfangbar sind.

Das erfindungsgemäße Steuergerät ist in unterschiedlichen Systemen verwendbar, in denen eine Mehrzahl von autonom steuerbaren Baugruppen zu steuern ist. Bevorzugt wird das erfindungsgemäße Steuergerät in einem Kraftfahrzeug als zentrale Fahrzeugsteuerelektronik verwendet. Da in einem Kraftfahrzeug häufig serienmäßig eine digitale Motorelektronik mit einem leistungsfähigen Mikroprozessor eingesetzt wird, der neben der Aufgabe der Motorsteuerung auch andere Aufgaben übernehmen kann, kann das erfindungsgemäße Steuergerät auf Basis einer solchen digitalen Motorsteuerung aufgebaut sein.

Bevorzugt dient eine erste virtuelle Steuereinheit als eine Motorsteuerung und eine zweite virtuelle Steuereinheit als eine Getriebesteuerung. Andere autonom steuerbare Baugruppen für ein Kraftfahrzeug sind z.B. ein Antiblockiersystem, ein Antischlupfsystem oder ein Airbag, wobei jede dieser Baugruppen je nach Ausstattung in dem Kraftfahrzeug angeordnet sein kann und von einer virtuellen Steuereinheit des erfindungsgemäßen Steuergerätes gesteuert ist.

Immer häufiger finden intelligente Sensoren Einzug in die moderne Automobilelektronik. Solche intelligenten Sensoren weisen eine rechnergesteuerte Auswertelektronik auf, die den eigentlichen Sensor steuert und von diesem ausgegebene Signale derart verarbeitet und aufbereitet, daß diese ohne großen Aufwand, wie z.B. das Umrechnen des Sensorsignals in ein zu der gemessenen physikalischen Größe in linearer Abhängigkeit stehendes Signal, verwertet werden können. Aufgrund von an den Sensororten oftmals auftretenden ungünstigen Umweltbedingungen ist die rechnergesteuerte Auswertelektronik des Sensors häufig nicht am Sensorort, sondern von dem eigentlichen Sensor räumlich getrennt angeordnet, so daß es möglich ist, die rechnergesteuerte Auswertelektronik eines intelligenten Sensors mittels des erfindungsgemäßen elektronischen Steuergerätes zu realisieren. Daher kann eine dritte virtuelle Steuereinheit des erfindungsgemäßen Steuergerätes als Auswertelektronik für einen solchen intelligenten Sensor, wie z.B. einen Ölniveausensor, eingesetzt sein. Ferner können virtuelle Steuereinheiten des erfindungsgemäßen Steuergerätes derart ausgelegt sein, daß von ihnen ein Überrollsensor oder eine Lambda-Sonde gesteuert werden oder werden kann, falls diese im Kraftfahrzeug vorhanden sind.

Für einige intelligente Sensoren sowie auch für das Steuern einiger steuerbarer Baugruppen eines Kraftfahrzeuges sind gemeinsame Daten, wie z.B bestimmte Motordaten, erforderlich. Diese gemeinsamen Daten können in jedem der den entsprechenden virtuellen Steuereinheiten zugeordneten Speicherbereiche redundant abgespeichert sein. Bevorzugt weist aber das erfindungsgemäße Steuergerät einen öffentlichen Speicherbereich zum Speichern von gemeinsamen Daten auf, wobei jede virtuelle Steuereinheit auf diese gemeinsamen Daten zugreifen kann, so daß ein redundantes Speichern der gemeinsamen Daten vermieden wird. Der öffentliche Speicherbereich kann Teil des Speichers des elektronischen Steuergerätes oder Teil des Arbeitsspeichers der zentralen Steuervorrichtung sein. Auch kann für den öffentlichen Speicherbereich ein eigenständiger Speicherbaustein vorgesehen sein.

Unabhängig von der oben benutzten Formulierung kann eine steuerbare Baugruppe auch eine regelbare Baugruppe und eine virtuelle Steuereinheit auch eine virtuelle Regeleinheit sein.

Die Erfindung wird anhand einer bevorzugten Ausführungsform unter Bezugnahme auf die Zeichnung näher beschrieben. In der Zeichnung zeigen
Figur 1 eine schematische Ansicht einer Ausführungsform eines elektronischen Steuergerätes gemäß der Erfindung, und
Figur 2 ein schematisches Blockschaltbild der Ausführungsform nach Figur 1.

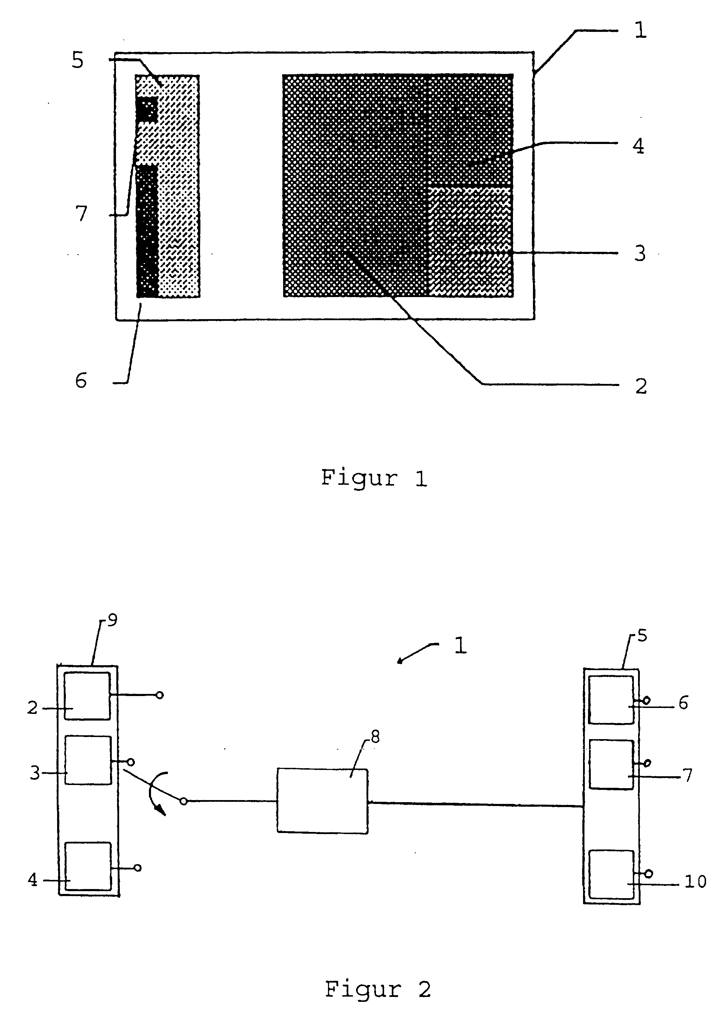

Wie aus den Figuren 1 und 2 ersichtlich, ist das elektronische Steuergerät 1 mit einer zentralen Steuervorrichtung 8, einem Speicher 9 und Steuerschnittstellen 5 versehen. Der Speicher 9 weist drei einander nicht überschneidende Speicherbereiche 2, 3 und 4 auf, wobei jeder Speicherbereich zusammen mit der zentralen Steuervorrichtung jeweils eine virtuelle Steuereinheit bildet. Eine erste der virtuellen Steuereinheiten ist als Kraftfahrzeugmotorsteuerung, eine zweite der virtuellen Steuereinheiten als eine Kraftfahrzeuggetriebesteuerung und eine dritte der virtuellen Steuereinheiten als eine Auswertelektronik für einen Ölniveausensor eingesetzt. Die Steuerschnittstellen 5 sind für das Übertragen von Signalen von dem Steuergerät zu der jeweiligen steuerbare Baugruppe und umgekehrt vorgesehen. Eine erste Steuerschnittstelle 10 ist der als Motorsteuerung eingesetzten virtuellen Steuereinheit zugeordnet und für das Übertragen von Signalen zwischen dem elektronischen Steuergerät 1 und dem Motor vorgesehen. Eine zweite Steuerschnittstelle 6 ist der als Getriebesteuerung eingesetzten virtuellen Steuereinheit zugeordnet und für das Übertragen von Signalen zwischen dem elektronischen Steuergerät 1 und einer aus dem elektronischen Steuergerät 1 ausgelagerten Getriebeaktuatorik vorgesehen. Ferner ist eine dritte Steuerschnittstelle 7 der als Auswertelektronik für den Ölniveausensor eingesetzten virtuellen Steuereinheit zugeordnet und für das Übertragen von Signalen zwischen dem elektronischen Steuergerät 1 und dem außerhalb des elektronischen Steuergerätes 1 angeordneten Ölniveausensor vorgesehen.

Jedem der drei Speicherbereiche 2, 3 und 4 ist eine eigene Diagnoseadresse und eine eigene Programmierungsadresse zugeordnet. Ferner weist die zentrale Steuervorrichtung (8) eine Diagnoseschnittstelle (nicht gezeigt) auf und ist derart ausgelegt, daß über diese unter Verwendung der Adressen auf den der jeweiligen Adresse zugeordneten Speicherbereich von außen gesondert zugegriffen werden kann. Über die Diagnoseadressen können für die jeweilige virtuelle Steuereinheit wichtige Arbeitsdaten aktualisiert, dokumentiert oder gelöscht werden. Ferner kann über die Programmierungsadressen auf die den jeweiligen virtuellen Steuereinheiten zugrundeliegenden Rechenprogramme zugegriffen werden, so daß diese unabhängig voneinander, d.h. jeweils gesondert, z.B. aktualisiert werden können. Auch erfolgt das Wechseln des Zugriffs der zentralen Steuervorrichtung auf die jeweiligen Speicherbereiche 2, 3 und 4 derart schnell, daß das erfindungsgemäße elektronische Steuergerät nach außen derart wirkt, als seien die virtuellen Steuereinheiten gleichzeitig verfügbar.

## Patentansprüche

1. Serienmäßiges elektronisches Steuergerät als serienmäßige Ausstattung eines Kraftfahrzeugs zum Steuern von gesonderten autonom steuerbaren Baugruppen in dem Kraftfahrzeug, mit einer zentralen Steuervorrichtung (8), einem Speicher (9) und Steuerschnittstellen (5), wobei
der Speicher (9) mehrere, einander nicht überschneidende Speicherbereiche (2,3,4) aufweist, denen jeweils eine Diagnoseadresse und eine Programmierungsadresse zugeordnet ist,
die zentrale Steuervorrichtung (8) unter Ausbildung jeweils einer der jeweiligen Baugruppe zugeordneten virtuellen Steuereinheit an jeden der Speicherbereiche (2,3,4) mit diesen im Zeitmultiplex zusammenwirkend angeschlossen ist, eine dem Speicher zugeordnete Diagnoseschnittstelle aufweist und derart ausgelegt ist, daß über diese Diagnoseschnittstelle unter Verwendung der Adressen auf den der jeweiligen Adresse zugeordneten Speicherbereich von außen für die Installation und für die Aktualisierung der virtuellen Steuereinheit gesondert zugegriffen werden kann, wobei die Verbindung zwischen der Diagnoseschnittstelle und dem jeweiligen Speicherbereich von der zentralen Steuervorrichtung bereitgestellt wird,
die Steuerschnittstellen (5) an die zentrale Steuervorrichtung (8) angeschlossen sind und jeder virtuellen Steuereinheit jeweils eine der Steuerschnittstellen (5) zugeordnet ist, und
eine erste der virtuellen Steuereinheiten als Kraftfahrzeugmotorsteuerung und eine zweite der virtuellen Steuereinheiten als Kraftfahrzeuggetriebesteuerung eingesetzt ist.

2. Elektronisches Steuergerät nach Anspruch 1, wobei das elektronische Steuergerät einen öffentlichen Speicherbereich zum Speichern von gemeinsamen Daten aufweist, auf den jede der virtuellen Steuereinheiten zugreifen kann.

3. Elektronisches Steuergerät nach Anspruch 1 oder 2, wobei eine dritte der virtuellen Steuereinheiten als Auswertelektronik für einen Ölniveausensor eingesetzt ist.

## Claims

1. A mass-produced electronic control unit in the form of mass-produced equipment of a motor vehicle for controlling separate independently controllable sub-assemblies in the vehicle, comprising a central control device (8), a memory (9) and control interfaces (5) in which
the memory (9) has a number of non-overlapping regions (2, 3, 4) each associated with a diagnostic address and a programming address,
the central control device (8) is connected to each storage region (2, 3, 4) and co-operates in time multiplex therein, in each case forming a virtual control unit associated with the respective sub-assembly, and has a diagnostic interface associated with the memory and is designed so that the virtual control unit can be separately accessed from the exterior via the diagnostic interface using the addresses in the memory region associated with the respective address, in order to install and update the virtual control unit, in which the connection between the diagnostic interface and the respective memory region is made by the central control device,
the control interfaces (5) are connected to the central control device (8) and one of the control interfaces (5) is associated with each virtual control unit, and
a first virtual control unit controls the vehicle engine and a second virtual control unit is used for controlling the vehicle gear unit.

2. An electronic control unit according to claim 1, in which the electronic control unit has an open memory region for storing common data which can be accessed by each virtual control unit.

3. An electronic control unit according to claim 1 or 2, in which a third virtual control unit is used as an evaluating electronic unit for an oil level sensor.

## Revendications

1. Appareil de commande électronique de série comme équipement de série d'un véhicule automobile pour commander des ensembles particuliers à commande autonome dans le véhicule comprenant :
un dispositif de commande centrale (8), une mémoire (9) et des interfaces de commande (5), dans lequel
la mémoire (9) a plusieurs zones de mémoire (2, 3, 4) qui ne se chevauchent pas et auxquelles sont associées chaque fois une adresse de diagnostic et une adresse de programme,
le dispositif de commande centrale (8) formant chaque fois une unité de commande virtuelle associée à chacun des ensembles, est relié à chacune des zones de mémoire (2, 3, 4) pour coopérer en multiplexage dans le temps, et comporte une interface de diagnostic associée à la mémoire, en étant conçu pour que par l'interface de diagnostic, en utilisant les adresses sur la zone de mémoire associée, on puisse accéder séparément de l'extérieur à l'installation et actualiser l'unité de commande virtuelle, la liaison entre les interfaces de diagnostic et la zone de mémoire respective étant assurée par le dispositif de commande centrale,
les interfaces de commande (5) étant reliées au dispositif de commande centrale (8), en associant à chaque unité de commande virtuelle chaque fois l'une des interfaces de commande (5), et
une première des unités de commande virtuelle est utilisable comme commande de moteur de véhicule automobile et une seconde unité de commande virtuelle est utilisable comme commande de boîte de vitesses de véhicule.

2. Appareil de commande électronique selon la revendication 1,
**caractérisé en ce qu'**
il comporte une zone de mémoire publique pour enregistrer des données communes auxquelles peut accéder chaque unité de commande virtuelle.

3. Appareil de commande électronique selon la revendication 1 ou 2,
**caractérisé par**
une troisième unité de commande virtuelle utilisée comme électronique d'exploitation pour un capteur de niveau d'huile.
